# EUROPÄISCHE PATENTSCHRIFT

(11) **EP 2 312 270 B1**
(45) Veröffentlichungstag und Bekanntmachung des Hinweises auf die Patenterteilung: **05.06.2013**
(21) Anmeldenummer: 10186955.0
(22) Anmeldetag: 08.10.2010
(51) Int. Cl.: G01B 21/04, B25J 9/16, G05B 19/401

(54) **Vorrichtung zur Überprüfung der Genauigkeit einer von einer Arbeitsspindel und/oder einem Maschinentisch auszuführenden Kreisbahn einer Werkzeugmaschine**
Device for testing the accuracy of a circuit of a machine tool to be performed by a work spindle and/or a machine table
Dispositif de contrôle de l'exactitude d'une bande circulaire d'une machine-outil devant être déroulée par une broche de travail et/ou une table de machine

(30) Priorität: 14.10.2009 DE 102009045688
(43) Veröffentlichungstag der Anmeldung: 20.04.2011
(73) Patentinhaber: Dreier Lasermesstechnik GmbH, 72160 Horb (DE)
(72) Erfinder: Dreier, Horst, 72160 Horb am Neckar (DE)
(74) Vertreter: Dreiss

(56) Entgegenhaltungen:
- EP-A2- 0 803 710
- DE-U1- 29 512 250
- US-A- 5 111 590
- US-A1- 2007 137 059
- Mitutoyo: "Mitutoyo Catalog No. E2004 - Measuring Instruments Catalog" 1. Januar 1999 (1999-01-01), Mitutoyo Corporation , XP002620213Seite 335, 528, Seite 335, Linear Scales for Numerical Motion Control System

## Beschreibung

Die Erfindung betrifft eine Vorrichtung zur Überprüfung der Genauigkeit einer von einer Arbeitsspindel und/oder einem Maschinentisch auszuführenden Kreisbahn, insbesondere einer NC-gesteuerten Werkzeugmaschine, mit einem an der Arbeitsspindel koaxial befestigbaren Einspannelement, einem am Einspannelement befestigbaren ersten Drehlager mit einer zur Arbeitsspindel koaxialen Drehachse und einer orthogonal dazu liegender Schwenkachse für ein erstes Schwenklager, einem das Schwenklager aufweisenden Messarm, einer den Messarm aufnehmenden Einstellvorrichtung mit einem zweiten Schwenklager mit einer parallel zur Schwenkachse des ersten Schwenklagers liegender Schwenkachse, einem zweiten Drehlager mit einer parallel zur Arbeitsspindel liegenden Drehachse und mit einem das zweite Drehlager tragenden Stator, wobei im Messarm ein Längenmesssystem zur Ermittlung einer Radialabweichung der Arbeitsspindel von einer Kreisbahn vorgesehen ist.

Eine Vorrichtung dieser Art ist bereits aus der EP 1 826 642 A1 bekannt. Mit dieser Vorrichtung kann die Bewegung einer Arbeitsspindel entlang einer Kreisbahn, z.B. zur Herstellung von Kreiszylinderflächen an Werkstücken, hochgenau vermessen werden. Eine ähnliche Vorrichtung ist aus der DE 295 12 250 U1 und der EP 0 526 056 A1 bekannt. Diese Vorrichtungen bieten den Vorteil, für die Genauigkeitsüberprüfung verschiedener Durchmesser von Kreiszylinderflächen nicht mehr entsprechend unterschiedliche Referenzzylinder einsetzen zu müssen. Allerdings sind diese Vorrichtungen aufgrund der induktiven Messwerterfassung in ihrer Auflösung und Genauigkeit begrenzt.

Außerdem muss eine Driftabweichung von bis zu ±9 µm auf 2 mm Messlänge hingenommen werden. Diese Abweichung ist oftmals zu groß für hochpräzise Werkzeugmaschinen. Aus der EP 0 803 710 A2 ist eine Positionsmesseinrichtung mit einem Maßstab aus Glas oder Glaskeramik bekannt.

Ausgehend von der EP 1 826 642 A1 liegt der Erfindung die Aufgabe zugrunde, eine Vorrichtung der eingangs erläuterten Art zu schaffen, mit der genauere Messungen durchgeführt werden können, wobei eine Anpassung der Vorrichtung an die zu vermessende Maschine einfach vorgenommen werden soll.

Diese Aufgabe wird bei einer Vorrichtung der eingangs genannten Art erfindungsgemäß dadurch gelöst, dass das Längenmesssystem einen eine Markierung tragenden Glasstab und eine Ablesevorrichtung aufweist.

Das einen Glasstab und eine Ablesevorrichtung aufweisende Längenmesssystem besitzt den wesentlichen Vorteil, dass es eine vernachlässigbar kleine Driftabweichung von <1 µm bei einer Messlänge von 5 mm aufweist. Die temperaturbedingte Längenänderung des Glasstabs ist vernachlässigbar klein und die Ablesevorrichtung ist so angeordnet, dass sich Änderungen in deren Abmessungen nicht oder kaum auswirken. Die Ablesevorrichtung liegt bei waagerecht positioniertem Messarm in der vertikalen Drehachse des zweiten Drehlagers, so dass eine Längenänderung neutral ist. Dabei kann die Kreisbahn in jeder der drei Ebenen (X-, Y- und Z-Ebene) gemessen werden.

Erfindungsgemäß ist der Glasstab an einem mit dem ersten Schwenklager verbundenen Stößel befestigt. Er kann auch über einen Träger an der Einstellvorrichtung festgelegt sein. Demgegenüber ist erfindungsgemäß die Ablesevorrichtung über einen Träger an der Einstellvorrichtung befestigt. Alternativ kann sie auch an einem mit dem ersten Schwenklager verbundenen Stößel befestigt sein. Es kann also der Glasstab oder die Ablesevorrichtung verschoben werden.

Bei einer bevorzugten Ausführungsform ist der Glasstab mit einem der Ablesevorrichtung zugewandten Code, insbesondere mit einem Strichcode versehen. Dieser die Markierung bildende Strichcode kann in sehr hoher Auflösung z.B. durch Ätzung oder Aufdruck, auf dem Glasstab angebracht werden und wird von der Ablesevorrichtung abgelesen.

Ist, wie bei einem bevorzugten Ausführungsbeispiel vorgesehen, die Ablesevorrichtung optischer Natur, dann erfolgt die Datenerfassung berührungslos und ist somit verschleißfrei und störunempfindlich.

Um die Störanfälligkeit möglichst klein zu halten, weist der Messarm eine elektronische Einrichtung für die Digitalisierung der gemessenen Daten auf. Diese werden drahtgebunden übermittelt.

Bei einem bevorzugten Ausführungsbeispiel ist vorgesehen, dass die Vorrichtung eine Zeitmesseinrichtung zur zeitlichen Kopplung der gemessenen Daten aufweist. Auf diese Weise können neben der Radialabweichung auch noch die Zeitdifferenzen zwischen den Triggersignalen erfasst werden.

Um die Messwerte störungs- und verlustfrei übertragen zu können, weist die rotierende Einheit eine Sende- und/oder Empfangseinrichtung zur drahtlosen Übermittlung von Daten an den Stator und/oder an eine externe Sende- und/oder Empfangseinrichtung auf. Dieser Vorgang kann während der Messung oder nach Beendigung der Messung erfolgen.

Erfindungsgemäß weist der Stator eine Sende- und/oder Empfangseinrichtung zur drahtlosen Übermittlung von Daten an eine externe Sende- und/oder Empfangseinrichtung auf. Die Verarbeitung der Daten kann auf diese Weise in einer externen Anlage erfolgen und der Speicher im Stator kann gelöscht werden.

Bei einem bevorzugten Ausführungsbeispiel arbeitet die Sende- und/oder Empfangseinrichtung mittels Funk oder nach dem Bluetooth-Standard.

Bei einer Weiterbildung der Erfindung ist vorgesehen, dass der Stator eine Einrichtung, insbesondere einen Encoder zur Erfassung der Drehgeschwindigkeit des zweiten Drehlagers aufweist. Vorzugsweise ist im Stator eine Speichereinrichtung zum Abspeichern der mittels der Einrichtung erfassten Geschwindigkeitsdaten vorgesehen. Eine vorteilhafte Ausführungsform sieht vor, dass im Stator eine Auswerteeinrichtung zur Korrelation der Geschwindigkeitsdaten und der Daten des Längenmesssystems vorgesehen ist. Neben der reinen Kreisformmessung kann nunmehr auch noch die Gleichlaufgeschwindigkeit der Arbeitsspindel gemessen werden. Der Vorteil besteht darin, dass anhand dieser Messung festgestellt werden kann, ob der ermittelte Kreisfehler auf die elektrischen Antriebe, Elektronik und/oder auf die Mechanik der Werkzeugmaschine zurück zu führen ist.

Weitere Vorteile, Merkmale und Einzelheiten der Erfindung ergeben sich aus den Unteransprüchen und der nachfolgenden Beschreibung, in der unter Bezugnahme auf die Zeichnung ein besonders bevorzugtes Ausführungsbeispiel beschrieben ist. Dabei können die in der Zeichnung dargestellten und in der Beschreibung und Ansprüchen erwähnten Merkmale jeweils einzeln für sich oder in beliebiger Kombination erfindungswesentlich sein.

Dabei zeigen:
- Figur 1: eine Seitenansicht einer bevorzugten Ausführungsform der erfindungsgemäßen Messvorrichtung;
- Figur 2: einen Längsschnitt durch den Messarm in zwei Messpositionen;
- Figur 3: einen Längsschnitt durch das erfindungsgemäße Längenmesssystem; und
- Figur 4: einen Vertikalschnitt durch den Stator.

Nachfolgend wird ein Ausführungsbeispiel beschrieben, bei dem die Kreisbahn einer Arbeitsspindel vermessen wird. Dies soll nur beispielhaft verstanden werden. Mit der erfindungsgemäßen Vorrichtung können auch verfahrbare Maschinentische vermessen werden.

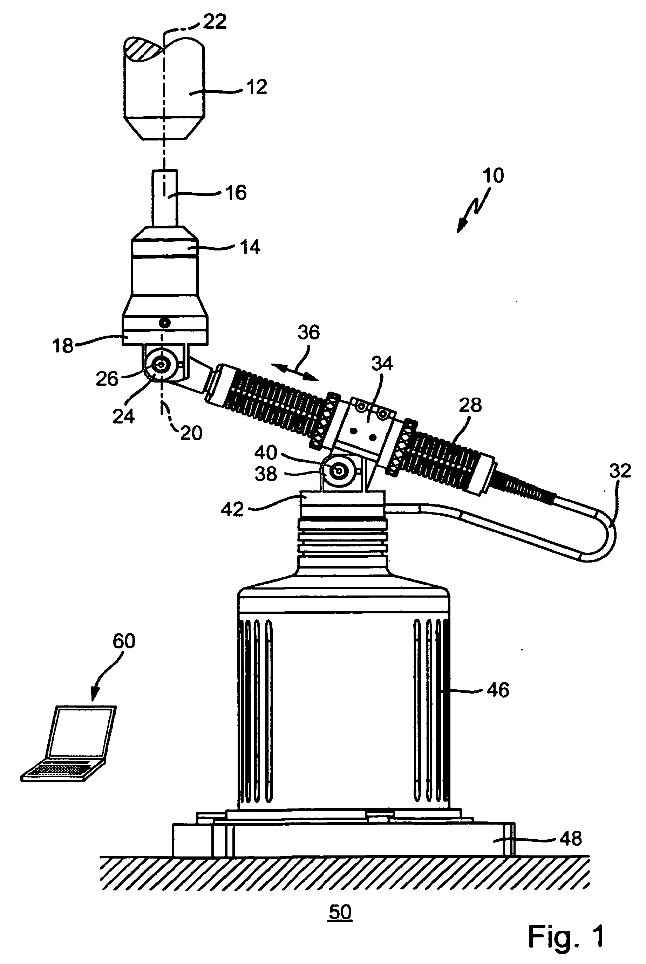

In der Figur 1 ist mit dem Bezugszeichen 10 eine Überprüfungsvorrichtung dargestellt, mit welcher von einer Arbeitsspindel 12 zum Beispiel von einer Werkzeugmaschine deren Rundlauf beziehungsweise deren Radialabweichung von einer Kreisbahn gemessen werden kann. Die Überprüfungsvorrichtung 10 weist ein Einspannelement 14 auf, welches mit seinem Einspannglied 16 koaxial an der Arbeitsspindel 12 befestigt wird, so dass das Einspannelement 14 die zu vermessende Kreisbahnkurve durchfährt. Das Einspannelement 14 weist ein Drehlager 18 auf, dessen Drehachse 20 koaxial zur Drehachse 22 der Arbeitsspindel 12 liegt. Unterhalb des Drehlagers 18 befindet sich ein Schwenklager 24 mit einer orthogonal zur Drehachse 20 liegenden Schwenkachse 26, an welchem ein Messarm 28 schwenkbar festgelegt ist. Der Messarm 28 ist in einer Einstellvorrichtung 34 befestigt, wobei er in der Einstellvorrichtung 34 in Richtung des Doppelpfeils 36 verschoben und fixiert werden kann.

An der Einstellvorrichtung 34 ist wiederum ein Schwenklager 38 mit einer Schwenkachse 40 vorgesehen, die parallel zur Schwenkachse 26 verläuft. Unterhalb des Schwenklagers 38 befindet sich ein zweites Drehlager 42, dessen Drehachse 44 orthogonal zur Schwenkachse 40 liegt und parallel zur Drehachse 20 des Drehlagers 18 und Drehachse 22 der Arbeitsspindel 12 verläuft. Das Drehlager 42 wird von einem Stator 46 gehalten, welcher an einer Spannplatte 48 befestigbar ist, die auf einem Maschinentisch 50 der zu vermessenden Werkzeugmaschine aufsitzt.

Im Messarm 28 wird die Radialabweichung von der Kreisbahn der um den Stator 46 bzw. dessen Drehachse 44 umlaufenden Arbeitsspindel 12 gemessen und digitalisiert, was weiter unten im Detail beschrieben wird.

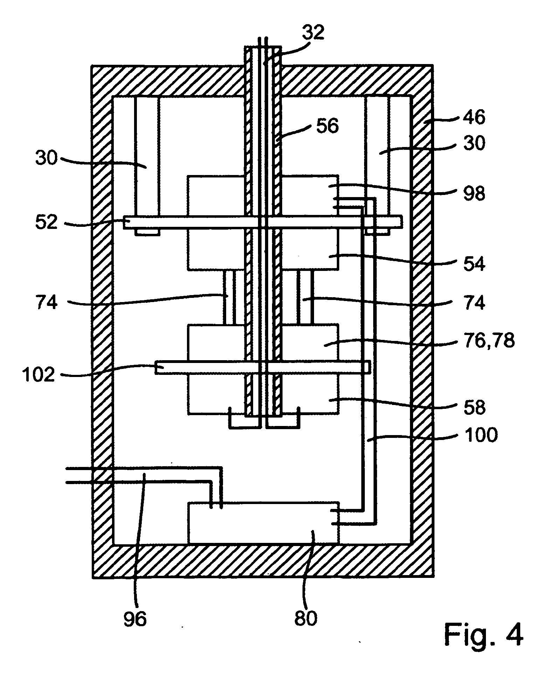

Im Stator 46 ist, wie in Figur 4 dargestellt, über zwei Abstandsbolzen 30 eine Platine 52 befestigt, der ein Encoder 54 gegenüber liegt. Dieser Encoder 54 sitzt auf einer die Drehachse 44 bildenden Hohlwelle 56, in welcher das Kabel 32 zu einer Auswerteelektronik 58 geführt ist. Mit dem Encoder 54 wird die Gleichlaufgeschwindigkeit um die Drehachse 44 gemessen. Dieser Encoder 52 ist mit Leitungen 74 mit einem Zwischenspeicher 76 verbunden, der eine Sende- und/oder Empfangseinrichtung 78 zur Übermittlung der Daten an eine stationäre Sende- und/oder Empfangseinrichtung 80 besitzt , die am Boden des Stators 46 vorgesehen ist und mit der die Daten an eine externe Einheit 60, zum Beispiel ein Notebook, einen PC oder eine andere Datenverarbeitungsanlage übermittelt werden. Dies kann auch mit einer Leitung 96 erfolgen. Es ist erkennbar, dass die gesamte Datenverarbeitung in Bauteilen erfolgt, die rotieren, d.h. mit der Welle 56 verbunden sind. Es sind also keine Datenverluste oder Datenfehler aufgrund von Übertragungsfehlern oder dergleichen zu befürchten. Außerdem erfolgt die Auswertung wesentlich schneller, da sie vor der Datenübertragung durchgeführt wird. Die Übertragung der Daten per Funk im Gegensatz zur Schleifringübertragung ist fehlerfrei.

Auf der stationären Platine 52 ist außerdem der stationäre Teil eines Schleifringes 98 befestigt, wohingegen der andere Teil von der Hohlwelle 56 getragen wird. Der Schleifring 98 dient zur Übertragung der für die Messvorgänge erforderlichen Energie, die über eine Leitung 100 bezogen wird. Der Zwischenspeicher 76 und die Sende- und/oder Empfangseinrichtung 78 werden von einer an der Hohlwelle befestigten Platine 102 getragen.

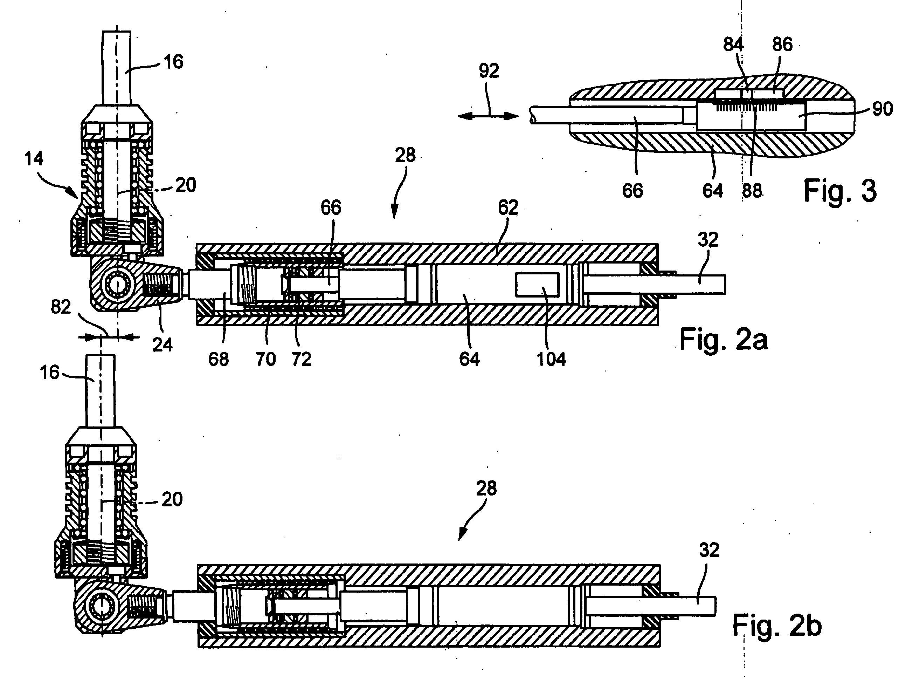

Die Figur 2 zeigt einen Längsschnitt durch den Messarm 28, der in einem Gehäuse 62 ein Längenmesssystem 64 trägt. Dieses besitzt eine Stößel 66, dessen freies Ende an einem Stempel 68 zum Beispiel mittels einer Schraube angekoppelt ist, wobei der Stempel 68 mit dem Schwenklager 24 verbunden ist. Der Stempel 68 ist über ein Längslager 70 leichtgängig in Richtung des Doppelpfeils 92 (Figur 3) gelagert und besitzt eine Verdrehkupplung 72. Innerhalb des Messarms 28 befindet sich noch eine elektronische Einrichtung 104 zur Digitalisierung der Messdaten, die mit dem Kabel 32 verbunden ist.

Zur Ermittlung der Radialabweichung weist das Längenmesssystem 64, welches im Detail in der Figur 3 dargestellt ist, eine Ablesevorrichtung 84 auf, welche in einem Träger 86 angeordnet ist. Mit dieser Ablesevorrichtung 84 wird eine Markierung 88, die in der Figur 3 nur andeutungsweise als Strichcode dargestellt ist, an einem Glasstab 90 abgelesen, welcher wiederum am Stößel 66 befestigt ist. Dieser Stößel 66 bewegt sich in Richtung des Doppelpfeils 92, was bei waagerecht liegendem Messarm 28 der Abweichung 82 entspricht. Die mit der Ablesevorrichtung 84 ermittelten Daten werden in der elektronischen Einrichtung 76 verarbeitet und über die Sende- und/oder Empfangseinrichtung 80 übermittelt. Die erfindungsgemäße Längenmesseinrichtung 64 besitzt den wesentlichen Vorteil, dass sie berührungslos arbeitet und keinen temperaturbedingten Drift besitzt.

Weiterhin können an die erfindungsgemäße Vorrichtung 10 bis zu fünf Temperaturfühler angeschlossen werden. Die einzelnen Temperaturfühler sind mit einem Anschlusskabel mit einer Länge zwischen 5 und 10 m an eine separate Schnittstelle mit fünf Eingängen und einem Datenausgang angeschlossen. In dieser Schnittstelle befindet sich eine Erfassungsplatine mit einem Speicherbauteil. Die Schnittstelle ist über eine Datenleitung mit der erfindungsgemäßen Vorrichtung 10 und somit mit dem darind integrierten Mikrocomputer verbunden. Bei Langzeitmessungen werden Messwerte der Kreismessung erfasst, aufbereitet und im Mikrocomputer in der Vorrichtung 10 abgespeichert. Der Mikrocomputer in der Vorrichtung 10 fragt dann, je nach Programmgestaltung vor oder nach jeder einzelnen Messung von dem Speicherchip über die Schnittstelle die derzeit aktuellen Temperaturwerte ab, die dann ebenfalls im Mikrocomputer in der Vorrichtung 10 abgespeichert werden. Danach werden die Messwerte von jeder einzelnen Messung zusammen mit den Temperaturdaten an die Auswerteeinrichtung, z.B. ein Notebook weitergeleitet und dort weiterverarbeitet und abgespeichert.

Ein eventueller Außentemperaturfühler kann auch direkt, z.B. über eine RS 232 Schnittstelle, direkt der Auswerteeinrichtung verbunden werden, so dass die Temperaturdaten direkt abgefragt werden können. Mit dessen Hilfe kann die Umgebungstemperatur rund um die zu vermessende Maschine gemessen und erfasst werden. Damit kann festgestellt werden in wiefern die Maschinentemperatur von der Umgebungstemperatur beeinflusst wird.

Die Temperaturfühler sind magnetisch und können an den verschiedensten Stellen an der Maschine angebracht werden und erfassen die Temperatur an diesen Stellen. Damit kann man dann feststellen, welches Bauteil sich erwärmt und somit für den Messversatz verantwortlich ist.

## Patentansprüche

1. Vorrichtung (10) zur Überprüfung der Genauigkeit einer von einer Arbeitsspindel (12) und/oder einem Maschinentisch (50) auszuführenden Kreisbahn, insbesondere einer NC-gesteuerten Werkzeugmaschine, mit einem an der Arbeitsspindel (12) koaxial befestigbaren Einspannelement (14), einem am Einspannelement (14) befestigbaren ersten Drehlager (18) mit einer zur Arbeitsspindel (12) koaxialen Drehachse (20) und einer orthogonal dazu liegender Schwenkachse (26) für ein erstes Schwenklager (24), einem das Schwenklager (24) aufweisenden Messarm (28), einer den Messarm (28) aufnehmenden Einstellvorrichtung (34) mit einem zweiten Schwenklager (38) mit einer parallel zur Schwenkachse (26) des ersten Schwenklagers (24) liegender Schwenkachse (40), einem zweiten Drehlager (42) mit einer parallel zur Arbeitsspindel (12) liegenden Drehachse (44) und mit einem das zweite Drehlager (42) tragenden Stator (46), wobei im Messarm (28) ein Längenmesssystem (64) zur Ermittlung einer Radialabweichung (82) der Arbeitsspindel (12) von einer Kreisbahn vorgesehen ist, **dadurch gekennzeichnet, dass** das Längenmesssystem (64) einen eine Markierung (88) tragenden Glasstab (90) und eine Ablesevorrichtung (84) aufweist, wobei der Glasstab (90) an einem mit dem ersten Schwenklager (24) verbundenen Stößel (66) befestigt ist oder über einen Träger (86) an der Einstellvorrichtung (34) befestigt ist.

2. Vorrichtung nach Anspruch 1, **dadurch gekennzeichnet, dass** die Ablesevorrichtung (84) über einen Träger (86) an der Einstellvorrichtung (34) oder an einem mit dem ersten Schwenklager (24) verbundenen Stößel (66) befestigt ist.

3. Vorrichtung nach Anspruch 1, **dadurch gekennzeichnet, dass** die Markierung (88) ein Strichcode ist.

4. Vorrichtung nach einem der vorhergehenden Ansprüche, **dadurch gekennzeichnet, dass** die Ablesevorrichtung (84) optischer Natur ist.

5. Vorrichtung nach einem der vorhergehenden Ansprüche, **dadurch gekennzeichnet, dass** der Messarm (28) eine elektronische Einrichtung (104) für die Digitalisierung der gemessenen Daten aufweist.

6. Vorrichtung nach Anspruch 5, **dadurch gekennzeichnet, dass** die elektronische Einrichtung (76) sich auf einer Messkarte befindet.

7. Vorrichtung nach einem der vorhergehenden Ansprüche, **dadurch gekennzeichnet, dass** der Messarm (28) mit einer eine Sende- und/oder Empfangseinrichtung (78) zur drahtlosen Übermittlung von Daten an den Stator (46) und/oder an eine externe Sende- und/oder Empfangseinrichtung (60) verbunden ist.

8. Vorrichtung nach einem der vorhergehenden Ansprüche, **dadurch gekennzeichnet, dass** der Stator (46) eine Sende- und/oder Empfangseinrichtung (80) zur drahtlosen Übermittlung von Daten an eine externe Sende- und/oder Empfangseinrichtung (60) aufweist.

9. Vorrichtung nach Anspruch 7 oder 8, **dadurch gekennzeichnet, dass** die Sende- und/oder Empfangseinrichtung (58, 80) mittels Funk oder nach dem Bluetooth-Standard arbeitet.

10. Vorrichtung nach einem der vorhergehenden Ansprüche, **dadurch gekennzeichnet, dass** der Stator (46) eine Einrichtung, insbesondere einen Encoder (54) zur Erfassung der Drehgeschwindigkeit des zweiten Drehlagers (42) aufweist.

11. Vorrichtung nach Anspruch 10, **dadurch gekennzeichnet, dass** im Stator (46) eine Speichereinrichtung (76), insbesondere zum Abspeichern der mittels der Einrichtung erfassten Geschwindigkeitsdaten, vorgesehen ist.

12. Vorrichtung nach Anspruch 11, **dadurch gekennzeichnet, dass** im Stator (46) eine Auswerteeinrichtung (58), insbesondere zur Korrelation der Geschwindigkeitsdaten und der Daten des Längenmesssystems (64), vorgesehen ist.

## Claims

1. Apparatus (10) for checking the accuracy of a circular path to be performed by a work spindle (12) and/or a machine table (50), in particular an NC-controlled machine tool, with a clamping element (14) which is coaxially attachable on the work spindle (12), a first rotary bearing (18) attachable on the clamping element (14) and having a rotation axis (20) coaxial with the work spindle (12) and a pivot axis (26) orthogonal thereto for a first pivot bearing (24), a measurement arm (28) including the pivot bearing (24), an adjusting device (34) which receives the measurement arm (28) and has a second pivot bearing (38) with a pivot axis (40) located parallel to the pivot axis (26) of the first pivot bearing (24), a second rotary bearing (42) with a rotation axis (44) disposed parallel to the work spindle (12), and with a stator (46) supporting the second rotary bearing (42), wherein a length measurement system (64) for determining a radial deviation (82) of the work spindle (12) from a circular path is provided in the measurement arm (28), **characterized in that** the length measurement system (64) has a glass rod (90) with a marking (88) and a reading device (84) and wherein the glass rod (90) is attached on a pin (66) connected with the first pivot bearing (24) or is attached on the adjusting device (34) via a support (86).

2. Apparatus according to claim 1, **characterized in that** the reading device (84) is attached via a support (86) on the adjusting device (34) or on a pin (66) connected with the first pivot bearing (24).

3. Apparatus according to claim 1, **characterized in that** the marking (88) is a line code.

4. Apparatus according to one of the preceding claims, **characterized in that** the reading device (84) is of an optical type.

5. Apparatus according to one of the preceding claims, **characterized in that** the measurement arm (28) comprises an electronic device (104) for digitizing the measured data.

6. Apparatus according to claim 5, **characterized in that** the electronic device (76) is located on a measuring board.

7. Apparatus according to one of the preceding claims, **characterized in that** the measurement arm (28) is connected with a transmitter and/or receiver (78) for wireless transmission of data to the stator (46) and/or to an external transmitter and/or receiver (60).

8. Apparatus according to one of the preceding claims, **characterized in that** the stator (46) comprises a transmitter and/or receiver (80) for wireless transmission of data to an external transmitter and/or receiver (60).

9. Apparatus according to claim 7 or 8, **characterized in that** the transmitter and/or receiver (58, 80) operate by way of radio or according to the Bluetooth standard.

10. Apparatus according to one of the preceding claims, **characterized in that** the stator (46) comprises a device, in particular an encoder (54), for measuring the rotation speed of the second rotary bearing (42).

11. Apparatus according to claim 10, **characterized in that** a memory device (76) is provided in the stator (46), in particular for storing the speed data measured with the device.

12. Apparatus according to claim 11, **characterized in that** an evaluation device (58), in particular for correlating the speed data and the data of the length measurement system (64), is provided in the stator (46).

## Revendications

1. Dispositif (10) de contrôle de l'exactitude d'une bande circulaire, en particulier d'une machine-outil à commande NC, devant être exécutée par une broche de travail (12) et/ou une table de machine (50), comprenant un élément de serrage (14) pouvant être fixé de façon coaxiale sur la broche de travail (12), un premier coussinet de rotation (18) pouvant être fixé sur l'élément de serrage (14) ayant un axe de rotation (20) coaxial avec la broche de travail (12) et un axe de pivotement (26) situé en position orthogonale par rapport à celui-ci pour un premier coussinet de pivotement (24), un bras de mesure (28) supportant le coussinet de pivotement (24), un dispositif de réglage (34) recevant le bras de mesure (28) ayant un deuxième coussinet de pivotement (38) avec un axe de pivotement (40) situé en position parallèle à l'axe de pivotement (26) du premier coussinet de pivotement (24), un deuxième coussinet de rotation (42) ayant un axe de rotation (44) situé en position parallèle à la broche de travail (12) et ayant un stator (46) supportant le deuxième coussinet de rotation (42), étant entendu qu'il est prévu dans le bras de mesure (28) un système de mesure de longueur (64) destiné à déterminer une déviation radiale (82) de la broche de travail (12) par rapport à une bande circulaire, **caractérisé en ce que** le système de mesure de longueur (64) présente une baguette en verre (90) portant un marquage (88) et un dispositif de lecture (84), étant entendu que la baguette en verre (90) est fixée sur un coulisseau (66) relié avec le premier coussinet de pivotement (24) ou fixée sur le dispositif de réglage (34) par le biais d'un support (86).

2. Dispositif selon la revendication 1, **caractérisé en ce que** le dispositif de lecture (84) est fixé sur le dispositif de réglage (34) ou sur un coulisseau (66) relié avec le premier coussinet de pivotement (24) par le biais d'un support (86).

3. Dispositif selon la revendication 1, **caractérisé en ce que** le marquage (88) est un code-barres.

4. Dispositif selon l'une des revendications précédentes, **caractérisé en ce que** le dispositif de lecture (84) est de nature optique.

5. Dispositif selon l'une des revendications précédentes, **caractérisé en ce que** le bras de mesure (28) présente un dispositif électronique (104) pour la numérisation des données mesurées.

6. Dispositif selon la revendication 5, **caractérisé en ce que** le dispositif électronique (76) se trouve sur une carte de mesure.

7. Dispositif selon l'une des revendications précédentes, **caractérisé en ce que** le bras de mesure (28) est relié avec un dispositif d'émission et/ou de réception (78) destiné à la transmission sans fil de données au stator (46) et/ou à un dispositif d'émission et/ou de réception externe (60).

8. Dispositif selon l'une des revendications précédentes, **caractérisé en ce que** le stator (46) présente un dispositif d'émission et/ou de réception (80) destiné à la transmission sans fil de données à un dispositif d'émission et/ou de réception externe (60).

9. Dispositif selon la revendication 7 ou 8, **caractérisé en ce que** le dispositif d'émission et/ou de réception (58, 80) fonctionne par radio ou selon la norme Bluetooth.

10. Dispositif selon l'une des revendications précédentes, **caractérisé en ce que** le stator (46) présente un dispositif, en particulier un encodeur (54), destiné à déterminer la vitesse de rotation du deuxième coussinet de rotation (42).

11. Dispositif selon la revendication 10, **caractérisé en ce qu'**il est prévu dans le stator (46) un dispositif d'enregistrement (76), en particulier, destiné à enregistrer les données de vitesse déterminées au moyen du dispositif.

12. Dispositif selon la revendication 11, **caractérisé en ce qu'**il est prévu dans le stator (46) une unité d'analyse (58), en particulier, destinée à corréler les données de vitesse et les données du système de mesure de longueur (64) .
